# EUROPEAN PATENT APPLICATION

(11) **EP 4 711 888 A1**
(43) Date of publication of application: **18.03.2026**
(21) Application number: 25200582.2
(22) Date of filing: 05.09.2025
(51) Int. Cl.: G06F 1/08, G06F 3/03, G06F 3/0354, G06F 3/038

(54) **COMPUTER IMPLEMENTED METHOD FOR OPERATING AN ELECTRONIC DEVICE WITH IMPROVED SURFACE CLASSIFICATION MANAGEMENT**

(30) Priority: 11.09.2024 EP 24199772
(71) Applicant: EM Microelectronic-Marin SA, 2074 Marin-Epagnier (CH)
(72) Inventor: SABY, Jérôme, 2022 Bevaix (CH); SCHLACHTER, Jérémy, 1584 Villars-le-Grand (CH); FARRELL, Josh, Colorado Springs, 80924 (US)
(74) Representative: ICB SA

(57) **Abstract**

The invention deals with a computer-implemented method for operating an electronic device comprising a microcontroller and an optical sensor generating flashes along an underlying surface, the method comprising steps for:
- calculating a surface optical sensor flash rate,
- generating surface flashes in order to acquire an associated image having pixels and identify surface characteristics along the underlying surface,
- classifying surface characteristics comprising a method of comparing a ripple of the average light detected per pixel to a threshold.

## Description

### Field of the invention

The present invention relates to a computer implemented method for operating an electronic device such a computer mouse.

### Background of the invention

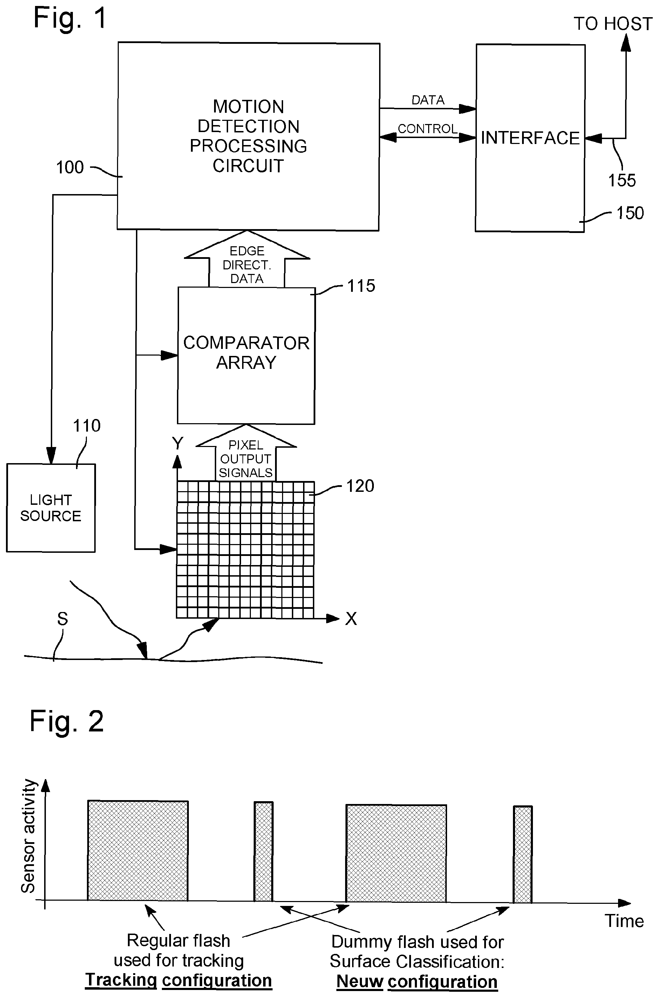

In the prior art it is known that an electronic device such a computer peripheral device, can use an optical sensor to calculate the displacement and generates reports to the computer. Also, this optical sensor has to operate on various type of surfaces. An example is shown in figure 1.

Surface classification and sensor tuning for a computer peripheral device is known from US20230120650A1.

Also, image processing is the conventional method to classify images and run detection algorithm. Usually, this is a complex processing task leading to large power consumption. Image processing requires computing resources and is not suited for battery supplied device such as mouse computer peripherals.

However, there is still a need to deal with detecting surface classifications. The invention aims to propose a new embodiment.

### Summary of the invention

According to a first aspect, the invention proposes an electronic device computer-implemented method for operating an electronic device comprising an optical sensor generating flashes along an underlying surface, the method comprising steps, in the following order, or with any other order, for:
- calculating a surface optical sensor flash rate,
- generating surface flashes in order to acquire an associated image having pixels and identify surface characteristics along the underlying surface,
- classifying surface characteristics comprising a method of comparing a ripple of the average light detected per pixel.

Invention lets to be more sensitive to the surface pattern and to provide a behaviour of the optical sensor not be different across a given surface. Classification of surface characteristics is more accurate thanks to the column average deviation method. This is also used during tracking operation to detect lift.

The electronic device comprises an optical sensor emitting flashes and calculating displacements, a communication module to communicate with a host MCU computer and a microprocessor coupled to the optical sensor.

Preferably, the method of comparing the average light detected per pixel comprises the steps, in the following order, or with any other order:
- define a pixel array of the image associated with the underlying surface,
- detect an average light for each pixel and associate the average light value with a column size or number,
- compare the average column light to an internal reference, preferably a programmable reference or the average of the complete image.

According to one embodiment, the method can comprise also steps:
- calculating a first or tracking optical sensor flash rate,
- generating tracking flashes in order to identify relative displacement along an underlying surface,
- calculating a second or surface optical sensor flash rate taking into account the tracking optical sensor flash rate,
- a surface flash being generated between two tracking flashes.

According to one embodiment, the flash duration of surface characteristics flash is less than the flash duration of tracking flash, preferably divided by two.

Preferably, the flash timing of surface characteristics flash is emitted approximately half the time between flashes of the tracking flashes.

Preferably, the time period between two tracking flashes is constant or variable.

According to another aspect of the invention, there is proposed an electronic device comprising:
- a housing,
- a communication module coupled to a host computer device,
- an optical sensor configured to generate optical data via flashes corresponding to an underlying surface,
- a microcontroller coupled to the optical sensor, configured to implement the computer-implemented method according to any of preceding features of the previous aspect.

### Brief description of the drawings

The present invention will be described subsequently in more detail with reference to the attached drawing, given by way of examples, but in no way limited thereto, in which:
- Figure 1 is an example of state-of-the-art architecture;
- Figure 2 is a time diagram showing a surface flash is generated between two tracking flashes, and
- Figure 3 is an illustration of column average deviation method to classify surface.

### Detailed description of the invention

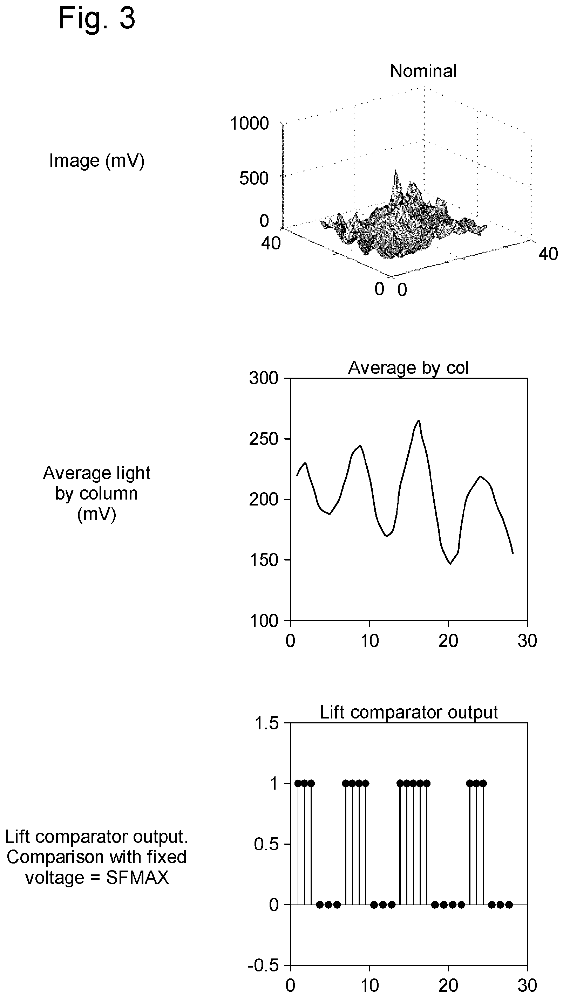

With reference to figure 3, there is illustrated a computer-implemented method for operating an electronic device comprising a housing including: a microcontroller, an optical sensor and a communication module coupled to a host computer device. The optical sensor is capable to generate flashes along an underlying surface and to acquire images resulting in whole or in part from the reflection of the light from these flashes on this surface. The microcontroller is connected to the optical sensor and the communication module. This microcontroller is configured to execute an embedded algorithm to implement this method for operating, notably by controlling the sensor and the communication module.

In this context, this method comprises steps for:
- calculating a surface optical sensor flash rate,
- generating surface flashes in order to acquire an associated image having pixels and identify surface characteristics along the underlying surface,
- classifying surface characteristics comprising a method of comparing a ripple of the average light detected per pixel to a threshold.

Preferably, the method of comparing the ripple of the average light detected per pixel comprises the following steps:
- define a pixel array of the image associated with the underlying surface,
- detect a ripple of the average light for each pixel and associate the ripple of the average light value with a column size or number,
- compare the average column light to an internal reference, preferably a programmable reference or the average of the complete image.

Particularly, in order to detect the surface characteristics, the microcontroller executes the embedded algorithm and will decode the ripple of the average light by column.

The image (voltage indication indicating the illumination of each pixel) is averaged by column.

The average column light is compared to an internal threshold/reference. This reference can be selected from a programmable reference or the average of the complete image. The comparator reference can be changed during operation in order to have the best settings to detect the surface characteristics. For example, each value of the average column is compared to an internal reference of 200mV.

Then the pattern given by the comparator output are decoded by the microprocessor in order to extract the first valid column, the first column higher than the reference, starting for the highest number. The result of the processing is a column number. In the illustration, the highest valid column is 25. For one flash, a column number is attributed.

The surface classification lasts a given count of flashes, for example 30. Flash to flash, the image will change, and the high column number will vary. The minimum column number and the maximum column number are stored for 30 flashes and then the difference (max - min) is compared to an internal threshold (7 in the current application), which is the criteria to distinguish the surface.

In the current application, only two types of surfaces are detected: gaming type surface and office type surface.

With reference to figure 2, there is illustrated an embodiment comprising also steps for:
- calculating a tracking optical sensor flash rate,
- generating tracking flashes in order identify relative displacement along an underlying surface,
- calculating a surface optical sensor flash rate taking into account the tracking optical sensor flash rate,
- generating surface flashes in order identify surface characteristics along the underlying surface, so that a surface flash is generated between two tracking flashes as illustrated in figure 2.

According to figure 2, the flash duration of surface characteristics flash is less than the flash duration of displacement flashes, preferably divided approximately by six.

It can noted that in this method:
- when the electronic device, here for example the computer mouse, is powered up (battery insertion), then on first touchdown on the surface, the device performs a surface classification and starts tracking using the setting defined for the detected surface;
- the surface classification can be performed at every touchdown of the device on the surface;
- the surface classification can be performed on user demand, through a command sent from host MCU to the sensor.

## Claims

1. A computer-implemented method for operating an electronic device comprising a microcontroller and an optical sensor generating flashes along an underlying surface, the method comprising steps for:
- calculating a surface optical sensor flash rate,
- generating surface flashes in order to acquire an associated image having pixels and identify surface characteristics along the underlying surface,
- classifying surface characteristics comprising a method of comparing a ripple of the average light detected per pixel to a threshold.

2. The method according to the preceding claim, in which the method of comparing the ripple of the average light detected per pixel comprises the following steps:
- define a pixel array of the image associated with the underlying surface,
- detect a ripple of the average light for each pixel and associate the ripple of the average light value with a column size or number,
- compare the ripple of the average column light to an internal reference, preferably a programmable reference or the average of the complete image.

3. The method according to any of the preceding claims, comprising steps for:
- calculating a tracking optical sensor flash rate,
- generating tracking flashes in order to identify relative displacement along an underlying surface,
- calculating a surface optical sensor flash rate taking into account the tracking optical sensor flash rate, and a surface flash is generated between two tracking flashes.

4. The method according to any of the preceding claims, in which the flash duration of surface characteristics flash is less than the flash duration of tracking flash, preferably divided by two.

5. The method according to any of the preceding claims, in which the flash timing of surface characteristics flash is emitted approximately half the time between flashes of the tracking flashes.

6. The method according to any of the preceding claims, in which the time period between two tracking flashes is constant or variable.

7. The method according to any of the preceding claims, in which the electronic device is a computer mouse.

8. An electronic device comprising:
- a housing,
- a communication module coupled to a host computer device,
- an optical sensor configured to generate optical data via flashes corresponding to an underlying surface,
- a microcontroller coupled to the optical sensor, configured to implement the computer-implemented method according to one of the preceding claims.

9. The electronic device according to the previous claim, is a computer mouse.
